# EUROPÄISCHE PATENTSCHRIFT

(11) **EP 0 607 212 B1**
(45) Veröffentlichungstag und Bekanntmachung des Hinweises auf die Patenterteilung: **07.05.1997**
(21) Anmeldenummer: 92920731.4
(22) Anmeldetag: 08.10.1992
(51) Int. Cl.: C08G 8/04

(54) **VERFAHREN ZUR FLAMMFESTMACHUNG VON PHENOL-FORMALDEHYD-HARZ**
METHOD FOR MAKING PHENOL-FORMALDEHYDE RESINS FLAME-RESISTANT
PROCEDE D'IGNIFUGATION DE LA RESINE PHENOL-FORMOL

(30) Priorität: 11.10.1991 DE 4133753
(43) Veröffentlichungstag der Anmeldung: 27.07.1994
(73) Patentinhaber: Chemische Fabrik Budenheim Rudolf A. Oetker, D-55257 Budenheim (DE)
(72) Erfinder: DORN, Karlheinz, D-6501 Budenheim (DE); FRANKENFELD, Klaus, D-6257 Hünfelden 1 (DE); NÄGERL, Hans-Dieter, D-6724 Dudenhofen (DE); SOMMER, Klaus, D-6702 Bad Dürkheim (DE)
(74) Vertreter: Weinhold, Peter, Dr.
(86) Internationale Anmeldenummer: EP9202320
(87) Internationale Veröffentlichungsnummer: WO9307192

(56) Entgegenhaltungen:
- CA-A- 2 000 341
- Dialog Information Services, file 351, World Patent Index, 81-82, Dialog accession No. 000894059 (PUCHKOVA IA NININ VK SHOR), "Phosphorus - contg polymers - with high fire resistance from phenol, formaldehyde and phosphororganic cpd",SU 322347, A, 7234

## Beschreibung

Die vorliegende Erfindung betrifft ein Verfahren zur Flammfestmachung von Phenol-Formaldehyd-Harz und ein derartiges Harz enthaltende Produkte. Insbesondere betrifft die vorliegende Erfindung die Verwendung von halogenfreien Phosphorverbindungen zur integralen Flammfestausrüstung von Phenol-Formaldehyd-Harzen.

Phenolharze werden als Rohstoffe oder als Hilfsmittel in Form von Binde- und Imprägniermitteln zur Herstellung einer Vielzahl von verschiedenartigen Produkten eingesetzt.

Die bevorzugten Anwendungsgebiete derartiger Harze sind bei der Verleimung von Holzwerkstoffen und der Herstellung von Formmassen und Lacken. Weiterhin werden Phenolharze als Bindemittel für die Herstellung von anorganischen oder organischen Faserverbundwerkstoffen eingesetzt, die als Schleifmittel oder Reibbeläge oder als Stoffe zur Wärme- und Schallisolation Anwendung finden. Darüber hinaus sind noch Anwendungen bei der Herstellung von Harzpapieren oder -geweben und bei der Herstellung von Phenolharzschäumen und anderen chemikalienfesten Baustoffen zu erwähnen.

Die Phenol-Formaldehyd-Kondensationsharze sind säure- oder basenkatalysierte Harze und werden in Form von vorkondensierten Produkten unter der Bezeichnung "Novolake" bzw. "Resole" ihrer Verwendung zugeführt. Die Herstellung dieser Produkte ist in der chemischen Standard-Literatur beschrieben, vgl. z.B. Ullmann, Enzyklopädie der chemischen Industrie, 2. Auflage, Band 13, Seiten 453 bis 478.

Für viele Produkte, die unter Verwendung von Phenol-Formaldehyd-Harzen hergestellt werden, sind Richtwerte für die Brennbarkeit vorgegeben. Zum Beispiel müssen Formteile für den Automobilbau, die aus Phenolharz-verfestigten Vliesstoffen oder Holzfaserplatten hergestellt werden, in der Brennbarkeit den Anforderungen nach DIN 54333 und DIN 75200 sowie US-FMVSS 302 genügen.

Seit einigen Jahren werden jedoch immer höhere Anforderungen hinsichtlich der Flammhemmung an diese Formteile und an andere der oben erwähnten Phenolharz-gebundenen Werkstoffe gestellt. So sollten z.B. Hartfaser-, Span- und Vermikulitplatten für besondere Anwendungen wie z.B. den Messebau flammfest nach Baustoffklasse B 1 ausgerüstet werden. Die Voraussetzungen für die Einreihung in die Baustoffklasse B 1 können zwar mit den in der Kunststoffindustrie üblichen Zusätzen erreicht werden, jedoch weisen alle diese Zusätze bestimmte Nachteile auf.

Zur Zeit werden Stoffe mit sehr unterschiedlichen chemischen Eigenschaften zur Flammhemmung eingesetzt. Die wichtigsten Beispiele hierfür sind Aluminiumhydroxid, Ammoniumsulfat, Ammoniumphosphat und -polyphosphat, Melaminborat, Antimontrioxid, roter Phosphor und eine Reihe von Halogenverbindungen, die in einem zusätzlichen Arbeitsgang den aus Phenolharzen hergestellten Produkten als Zuschläge hinzugefügt werden.

Aluminiumhydroxid muß dem Phenol-Formaldehyd-Harz in einer Konzentration von bis zu 50 Gew.-% zugegeben werden, wenn das erstere den gestellten Anforderungen an die Flammhemmung gerecht werden soll. Dadurch werden jedoch die physikalischer Eigenschaften von z.B. Hartfaserplatten stark verändert.

Flammschutzmittel wie Ammoniumphosphate und -sulfate sind wasserlöslich und können aus den Werkstoffen bzw. Endprodukten ausgewaschen werden. Durch gelöstes Ammoniumsulfat in Formteilen auf der Basis von Vliesstoffen können überdies Korrosionen ausgelöst werden.

Beim Einsatz von Ammoniumpolyphosphat ergeben sich Schwierigkeiten bei der gleichmäßigen Verteilung im Phenolharz, was zu unbefriedigenden Phenolharz-gebundenen Werkstoffen führt.

Mit Boraten kann die geforderte Baustoffklasse B 1 nicht erreicht werden. Melaminborat kann jedoch als Teilkomponente zur Verhinderung des Nachglimmens eingesetzt werden.

Der Einsatz von Halogenverbindungen und von Antimontrioxid ist aus Gründen des Umweltschutzes unerwünscht. Roter Phosphor als Flammschutzmittel führt zu Problemen bei dessen Handhabung.

Aus J.W. Lyons, "The Chemistry and Uses of Fire Retardants", 1970, Seiten 417-418, ist die Umsetzung von Phosphoresterchloriden mit phenolischen Körpern zum Zwecke der Flammfestausrüstung von Phenol-Formaldehyd-Harzen bekannt. Diese Umsetzung verläuft unter Abspaltung von HCl-Gas und ist deshalb nur auf Novolak-Harze anwendbar. Resol-Harztypen können damit nicht flammfest ausgerüstet werden, da durch das freigesetzte HCl-Gas das für die Herstellung dieser Harze notwendige basische Katalysatorsystem beeinträchtigt bzw. außer Funktion gesetzt wird. Darüber hinaus führt die Umsetzung mit Phosphoresterchloriden zu einer starken Korrosion in den Apparaturen. Ausserdem ist auch die Anwendung der so flammfest ausgerüsteten Novolak-Harze bedingt durch deren hohen Gehalt an Halogeniden (insbesondere dann, wenn zusätzlich halogenierte Phosphorverbindungen eingesetzt werden) begrenzt. Im Brandfall werden nämlich große Mengen an Halogenwasserstoffgas in Freiheit gesetzt. Weiter Lassen sich Phenol-Formaldehyd-Harze mit Phosphorverbindungen vom Tpy "Fyrol 6" flammfest ausrüsten, vgl. CA-A-2 000 341.

Es wurde nun überraschenderweise gefunden, daß man Werkstoffe auf der Basis von Phenol-Formaldehyd-Harz direkt flammfest ausrüsten kann, wenn man die in Ansprüchen 1-3 vor liegender Anmeldung beschriebenen halogenfreien sauer reagierenden Phosphorverbindungen dem vorkondensierten Phenol-Formaldehyd-Harz zu irgendeinem Zeitpunkt vor der Verarbeitung (Härtung) zum Endprodukt zumischt. Dadurch werden die halogenfreien Phosphorverbindungen homogen im vorkondensierten Harz verteilt und bei der Weiterverarbeitung bzw. Anwendung werden diese Verbindungen somit zu einem integralen, unlöslichen Bestandteil der Harzmassen.

Besondere Vorteile ergeben sich erfindungsgemäß, wenn Basenkatalysierte Phenol-Formaldehyd-Harze Verwendung finden, weil durch die vorliegende Flammfestausrüstung eine Freisetzung saurer Halogenwasserstoffgase nicht möglich ist. Weiterhin geht von der erfindungsgemäßen Flammfestausrüstung weder bei der Verarbeitung der Harze noch im Brandfall eine Korrosion aus. Die vorliegende Erfindung stelltsomit ein Verfahren zur Flammfestmachung von Phenol-Formaldehyd-Harzen und diese Harze enthaltenden Produkten zur Verfügung, das dadurch gekennzeichnet ist, daß man den vorkondensierten Harzen vor der Härtung eine oder mehrere halogenfreie Phosphorverbindungen einverleibt, die bei der Weiterverarbeitung (Härtung) der Harze über kovalente Bindungen an das Harzgerüst gebunden werden und/oder als solche oder in Form von Aggregaten bzw. Kondensaten im Harzgerüst eingeschlossen werden, wobei diese halogenfreien Phosphorverbindungen ausgewählt werden aus Estern von Sauerstoffsäuren des Phosphors mit Hydroxylgruppen-haltigen Kohlenstoffverbindungen, die über mindestens eine an Phosphor gebundene freie Hydroxylgruppe verfügen und ferner nach diesem Verfahren hergestellte vorkondensierte Phenol-Formaldehyd-Harze. Als zur Herstellung der Ester geeignete halogenfreie Phosphorverbindungen eignen sich insbesondere (saure) von Sauerstoffverbindungen des vorzugsweise fünfwertigen Phosphors abgeleitete Verbindungen, speziell Phosphor- und Phosphonsäureverbindungen.

Konkrete Beispiele für Phosphor- und Phosphonsäuren sind Ortho-, Pyro-, Tri- und Polyphosphorsäuren (vorzugsweise Polyphosphorsäuren) sowie Phosphonsäuren mit vorzugsweise 1 bis 20 und insbesondere 1 bis 10 Kohlenstoffatomen, wie Methanphosphonsäure, Hydroxyethandiphosphonsäure, 3-Aminopropanphosphonsäure, 5-Diethylentriamino-pentanphosphonsäure, 4-Ethylendiamino-butanphosphonsäure, Morpholinomethandiphosphonsäure und 2-Phosphonobutan-1,2,4-tricarbonsäure.

Reaktionspartner für die obigen Sauerstoffverbindung des Phosphors, insbesondere für die Phosphor- und Phosphonsäuren, sind hydroxylgruppenhaltige Kohlenstoffverbindungen, die unter Ausbildung von P-O-C-Bindungen mit den Phosphorverbindungen reagieren können, wie z.B. Alkohole, Phenole und Carbonsäuren.

Die einfachsten und am meisten bevorzugten Verbindungen dieser Stoffklasse sind Alkohole und Phenole, die vorzugsweise mehrwertig sind. Die Alkohole können sowohl aliphatisch als cycloaliphatisch, gesättigt und ungesättigt sein, wobei sie in der Regel 2 bis 20, insbesondere 2 bis 10 Kohlenstoffatome und 2 bis 6, insbesondere 2 bis 4, Hydroxylgruppen aufweisen. Die aromatischen Alkohole (Phenole) weisen in der Regel eine Gesamtkohlenstoffzahl von 6 bis 20, insbesondere 6 bis 10 und vorzugsweise 2 bis 4 (insbesondere 2 oder 3) direkt an das aromatische System gebundene Hydroxylgruppen auf. Vorzugsweise bilden diese Alkohle und Phenole jeweils eine oder zwei P-O-C-Brücken mit der Phosphorverbindung aus.

Konkrete und bevorzugte Beispiele für die cbigen Alkohole sind Ethylenglykol, Glycerin, 1,2- und 1,3-Propandiol, Trimethylolpropan, 1,4-Butandiol, 1,2,6-Hexantriol, Pentaerythrit, Cyclohexandiol, Meso-Inosit, 1,4-Dihydroxymethyl-2,5-dihydroxybenzol, Brenzkatechin und Resorcin.

Die mehrwertigen Alkohole können entweder allein oder als Mischung von mehreren Verbindung und/oder in Mischung mit einwertigen Alkoholen eingesetzt werden. Das entsprechende Endprodukt (z.B. der Phosphorsäure- bzw. Phosphonsäureester) enthält mindestens eine an Phosphor gebundene freie Hydroxylgruppe (und vorzugsweise auch mindestens eine an Kohlenstoff gebundene freie Hydroxylgruppe).

Erfindungsgemäß besonders bevorzugte Reaktionsprodukte, die sich in die oben beschriebene Stoffklasse einreihen lassen, sind Verbindungen, die sich von aromtischen Polyolen (insbesondere Diphenolen) mit Polyphosphorsäure oder den oben genannten Phosphorsäuren ableiten, da beim Verarbeiten der vorkondensierten Harze die flammfeste Ausrüstung direkt in die Struktur der ausgehärteten Phenol-Formaldehyd-Harze eingebaut wird.

Erfindungsgemäß wurde weiterhin festgestellt, daß alle der oben genannten Verbindungen einen besonders günstigen Einfluß auf die Flammfestigkeit der Endprodukte ausüben, wenn sie zusätzlich Stickstoff enthalten. Hierbei sind insbesondere Verbindungen zu erwähnen, die sich von stickstoffhaltigen Phosphonsäuren (z.B. solchen, wie sie oben genannt wurden) ableiten.

Erfindungsgemäß können sowohl einzelne halogenfreie Phosphorverbindungen als auch Mischungen derartiger Verbindungen eingesetzt werden. Bevorzugt bestehen derartige Mischungen überwiegend (z.B. zu mindestens 75 Gew.-%) aus organischen Phosphorverbindungen (z.B. Estern).

Die Flammfestigkeit der Endprodukte wird erfindungsgemäß in erster Linie durch den Phosphorgehalt, bezogen auf die Phenolharzmenge, bestimmt. Üblicherweise werden die erfindungsgemäß verwendeten Phosphorverbindungen in Mengen eingesetzt, die zu einem Phosphorgehalt des flammfest ausgerüsteten Harzes von 0,5 bis 15 Gew.-% führen. Besonders bevorzugt wird ein Phosphorgehalt von 1 bis 12, und insbesondere ein solcher von 2 bis 8 Gew.-%.

Die erfindungsgemäß verwendbaren Phosphorverbindungen weisen naturgemäß unterschiedliche Phosphorkonzentrationen auf. Bei den organischen Phosphorverbindungen ist im allgemeinen ein Phosphor-Gehalt im Bereich von ca. 12 bis 29 Gew.-% anzutreffen.

Die Brennbarkeit der mit dem erfindungsgemäß flammfest ausgerüsteten Phenolharz verarbeiteten Werkstoffe, wie z.B. Holz, Papier, Vliese, Mineralfasern usw., hat ebenfalls einen Einfluß auf die Flammfestigkeit des Endprodukts.

Auch die Molekülstruktur der erfindungsgemäß eingesetzten Phosphorverbindungen übt einen Einfluß auf die Flammfestigkeit der Endprodukte aus. So wurde z.B. gefunden, daß die P-OH-Gruppen enthaltenden Phosphorverbindungen durch diese im Molekül enthaltene saure Gruppe schneller und stärker dehydratisierend auf sauerstoffhaltige organische Verbindungen einwirken. Insbesondere trifft dies auf die Phosphorsäureester zu, die aus mehrwertigen Alkoholen gebildet werden und zur Ausbildung von Ringstrukturen neigen. Weiter weisen, wie bereits oben erwähnt, z.B. Phosphorverbindungen, die aus stickstoffhaltigen Phosphonsäuren hergestellt wurden, bei gleichem Phosphorgehalt eine grössere Flammhemmung auf als die entsprechenden Stickstoff-freien Phosphorverbindungen.

Die anorganischen Phosphorverbindungen führen zur Ausbildung von nicht brennbaren Gerüststrukturen, von denen ein flammschützender Effekt ausgeht.

Die erfindungsgemäß verwendeten Phosphorverbindungen werden als Mischungskomponente in den vorkondensierten Phenol-Formaldehyd-Harzen gleichmäßig verteilt und anschließend bei deren Verarbeitung fest in die Harzstruktur eingebunden, wodurch ein im Harz integrierter Flammschutz erzielt wird, der als flammschützender Überzug auf den mit Phenolharz hergestellten Werkstoffen wirksam ist.

Gegenüber dem Stand der Technik ergeben sich dadurch eine Reihe von Vorteilen:

Die Eintragung der Flammschutzkomponente erfolgt mit der Phenolharzverarbeitung. Ein zusätzlicher Arbeitsgang zur Aufbringung des Flammschutzes ist somit nicht erforderlich. Die Eigenschaften der hergestellten Werkstoffe werden dabei mit Ausnahme des Brennverhaltens nur unwesentlich verändert.

Die Flammschutzkomponente ist (chemisch und/oder physikalisch) fixiert und kann nicht ausgewaschen werden. Dadurch ist der Flammschutz dauerhaft. Weiterhin werden eventuelle Korrosionseinflüsse auf andere Stoffe und umweltrelevante Folgeerscheinungen insbesondere aufgrund der Abwesenheit von Halogen ausgeschlossen.

Im Gegensatz zu den bekannten neutralen tertiären Arylestern, wie z.B. Triphenylphosphat und Trikresylphosphat, die stark toxisch sind, zeichnen sich die erfindungsgemäß bevorzugt eingesetzten sauren Phosphorverbindungen durch eine geringe Flüchtigkeit, verbunden mit einer minimalen Giftigkeit, aus.

Im übrigen kann bei der Verwendung der erfindungsgemäß eingesetzten Phosphorverbindungen in bestimmten Fällen auf den Einsatz von weiteren Kondensationskatalysatoren verzichtet werden.

Die Anwendung der erfindungsgemäß verwendeten halogenfreien Phosphorverbindungen bei der Flammfestausrüstung von Phenol-Formaldehyd-Harzen oder den unter Verwendung von Phenol-Formaldehyd-Harzen hergestellten Produkten ist einfach und kann z.B. durch Beimischen der halogenfreien Phosphorverbindungen zu den vorkondensierten Harzen erfolgen. Die dazu anzuwendende Mischtechnik richtet sich nach dem Harztyp und den mit Harz beaufschlagten anderen Materialien, die zur Herstellung der konkreten Endprodukte, wie z.B. Spanplatten, Dämmplatten und Preßmassen, notwendig sind.

Bei der Verarbeitung von Phenol-Formaldehyd-Harzen zu Preßmassen werden die halogenfreien Phosphorverbindungen vorzugsweise bei der Herstellung der Rohlinge zusammen mit den brennbaren Füllstoffen wie z.B. Holzmehl, Zellstoff, Textilien usw. in einem Kneter oder anderen Zwangsmischer homogen in die Preßmassen eingearbeitet. Eine vergleichbare Technik wird vorzugsweise angewendet, wenn Pulverharze flammfest ausgerüstet werden sollen.

Bei der Flammfestausrüstung von niedermolekularen Resolen werden die halogenfreien Phosphorbindungen zweckmäßig in die viskose Harzmatrix eingerührt, so daß eine einphasige Mischung aus Phenol-Formaldehyd-Harz und halogenfreier Phosphorverbindung entsteht. Die Zubereitung der Mischung erfolgt vorzugsweise kurz bzw. unmittelbar vor Verwendung der Resole.

Die Auswahl der halogenfreien Phosphorverbindung für einen konkreten Zweck richtet sich nach der beabsichtigten Verwendung des Phenol-Formaldehyd-Harzes. Im Falle von Spanplatten als beabsichtigtem Endprodukt wird es bevorzugt, Produkte auf der Basis von Polyphosphorsäure, Pentaerythrit und anderen aliphatischen Polyolen in Kombination mit anorganischen Phosphorverbindungen (z.B. den oben genannten Salzen) einzusetzen. Im Falle von Vliesen kann es zweckmäßig sein, nur die zuerst genannten Produkte einzusetzen.

Bei der Herstellung von Dämmplatten hat sich der Zusatz von anorganischen Phosphaten, insbesondere von Zinn(IV)-Phosphat besonders bewährt. Die Vliese können durch Spritzauftrag mit den viskosen vorkondensierten und flammfest ausgerüsteten Harzen beschichtet werden. Es ist daher wünschenswert, daß die anorganischen Phosphate in einer Korngröße vorliegen, die den Spritzauftrag nicht durch Verstopfen der Düse beeinträchtigt. Die Korngröße der halogenfreien Phosphorverbindung wird deshalb im allgemeinen unter 100 µm liegen.

Die folgenden Beispiele dienen zur weiteren Erläuterung der vorliegenden Erfindung, ohne diese in irgendeiner Weise zu beschränken.

### BEISPIEL 1

Ein Phenol-Formaldehyd-Harz vom Resol-Typ wurde wie folgt flammfest ausgerüstet:

Eine halogenfreie Phosphorverbindung wurde durch Kondensationsreaktion von Phosphorsäure, Pentaerythrit und Glycerin im Molverhältnis 2:1:1 hergestellt. 100 Gewichtsteile des vorkondensierten Phenol-Formaldehyd-Harzes wurden mit 30 Gew.-Teilen der Phosphorverbindung homogen vermischt und die Mischung wurde in eine Form gegossen, deren Maße der Vorschrift UL 94 (Underwriters Laboratories) entsprachen.

Die durch anschließende Wärmehärtung des Harzes hergestellten Prüfkörper erhielten im Brennbarkeitstest die Bewertung V-O.

### BEISPIEL 2

Die in Beispiel 1 hergestellte Mischung aus Phenol-Formaldehyd-Harz und halogenfreier Phosphorverbindung wurde in einer Menge von 55 Gew.-Teilen in 100 Gew.-Teilen Holzfasern gleichmäßig appliziert. Durch Verpressen wurden plattenförmige Gebilde erhalten. Die so hergestellten Platten wurden einem Beflammtest nach DIN 4102, Teil 1, unterzogen und erfüllten die Anforderungen der Baustoffklasse B 1.

### BEISPIEL 3

Zur Herstellung von flammfest ausgerüsteten Dämmstoffen, die im Automobilbau Verwendung finden, wurden 100 Gew.-Teile Reißbaumwolle mit 45 Gew.-Teilen einer flammfest ausgerüsteten Mischung aus Phenol-Formaldehyd-Harz und einer halogenfreien Phosphorverbindung zu einem plattenförmigen Gebilde verbunden. Die flammfest ausgerüstete Harzmischung hatte einen Phenol-Formaldehyd-Harz-Gehalt von 62 Gew.-%, entsprechend einem Gehalt an Phosphorverbindungen von 38 Gew.-%. Die Phosphorverbindungen bestanden aus einem Gemisch von 75% Aminomethanphosphonsäureethylenglykolester und 25% primärem Zinn(IV)-phosphat.

Einer internen Testmethode des Automobilherstellers zufolge wurde die geforderte Schwerentflammbarkeit der Dämmplatten erreicht.

## Patentansprüche

1. Verfahren zur Flammfestmachung von Phenol-Formaldehyd-Harzen und diese Harze enthaltenden Produkten, dadurch gekennzeichnet, daß man den vorkondensierten Harzen vor der Härtung eine oder mehrere halogenfreie Phosphorverbindungen einverleibt, die bei der Weiterverarbeitung (Härtung) der Harze über kovalente Bindungen an das Harzgerüst gebunden werden und/oder als solche oder in Form von Aggregaten bzw. Kondensaten im Harzgerüst eingeschlossen werden, wobei diese halogenfreien Phosphorverbindungen ausgewählt werden aus Estern von Sauerstoffsäuren des Phosphors mit Hydroxylgruppen-haltigen Kohlenstoffverbindungen, die über mindestens eine an Phosphor gebundene freie Hydroxylgruppe verfügen.

2. Verfahren nach Anspruch 1, dadurch gekennzeichnet, daß es sich bei den Sauerstoffsäuren des Phosphors um Phosphor- und Phosphonsäuren handelt.

3. Verfahren nach Anspruch 1, dadurch gekennzeichnet, daß die Hydroxylgruppen-haltigen Kohlenstoffverbindungen mehrwertige Alkohole und/oder mehrwertige Phenole, vorzugsweise ausgewählt aus Ethylenglykol, Glycerin, 1,2- und 1,3-Propandiol, Dimethylolpropan, 1,4-Butandiol, 1,2,6-Hexantriol, Pentaerythrit, Cyclohexandiol, Meso-Inosit, 1,4-Dihydroxymethyl-2,5-dihydroxybenzol, Brenzkatechin, Resorcin und Mischungen derselben, umfassen.

4. Verfahren nach irgendeinem der Ansprüche 1 bis 3, dadurch gekennzeichnet, daß den Harzen soviel halogenfreie Phosphorverbindungen zugegeben werden, daß ein Phosphorgehalt von 1 bis 12, insbesondere 2 bis 8 Gew.-% resultiert.

5. Verfahren nach irgendeinem der Ansprüche 1 bis 4, dadurch gekennzeichnet, daß das vorkondensierte Harz vor der Härtung mit üblichen Füllstoffen versehen wird.

6. Vorkondensierte Phenol-Formaldehydharze, erhältlich nach dem Verfahren gemäß irgendeinem der Ansprüche 1 bis 5.

7. Verwendung der vorkondensierten Phenol-Formaldehydharze gemäß Anspruch 6 bei der Herstellung von Formmassen, Lacken, Binde- und Imprägniermitteln sowie Klebstoffen.

## Claims

1. A method for making phenol-formaldehyde resins and products containing said resins flame-resistant, characterized in that one or more halogen-free phosphorus compounds are incorporated in the precondensed resins prior to the curing thereof, said halogen-free phosphorus compounds upon further processing (curing) of the resins being bonded to the resin structure through covalent bonds and/or being occluded in the resin structure, as such or in the form of aggregates or condensates, said halogen-free phosphorus compounds being selected from esters of oxygen acids of phosphorus with hydroxyl group-containing carbon compounds, which esters have at least one free hydroxyl group bonded to phosphorus.

2. The method according to claim 1, characterized in that said oxygen acids of phosphorus are phosphoric and phosphonic acids.

3. The method according to claim 1, characterized in that said hydroxyl group-containing carbon compounds comprise polyvalent alcohols and/or polyvalent phenols, preferably selected from ethylene glycol, glycerol, 1,2- and 1,3-propanediol, dimethylolpropane, 1,4-butanediol, 1,2,6-hexanetriol, pentaerythritol, cyclohexanediol, meso-inositol, 1,4-dihydroxymethyl-2,5-dihydroxybenzene, pyrocatechol, resorcinol and mixtures thereof.

4. The method according to any one of the claims 1 to 3, characterized in that said halogen-free phosphorus compounds are added to the resins in an amount which results in a phosphorus content of 1 to 12, particularly 2 to 8% by weight.

5. The method according to any one of the claims 1 to 4, characterized in that prior to its curing the precondensed resin is provided with conventional fillers.

6. Precondensed phenol-formaldehyde resins, obtainable according to the method according to any one of the claims 1 to 5.

7. Use of the precondensed phenol-formaldehyde resins according to claim 6 for the manufacture of molding compositions, coating compositions, binders, impregnating agents and adhesives.

## Revendications

1. Procédé d'ignifugation de résines phénol-formaldéhyde et de produits contenant ces résines, caractérisé en ce que l'on incorpore aux résines précondensées, avant le durcissement, un ou plusieurs composés phosphorés non halogénés qui, lors du traitement ultérieur (durcissement) des résines, se lient par des liaisons covalentes au squelette des résines et/ou sont enfermés tels quels ou sous forme d'agrégats ou de produits condensés dans le squelette des résines, ces composés phosphorés non halogénés étant choisis parmi des esters d'acides oxygénés du phosphore avec des composés carbonés contenant des groupes hydroxyle, qui disposent d'au moins un groupe hydroxyle libre lié au phosphore.

2. Procédé selon la revendication 1, caractérisé en ce que les acides oxygénés du phosphore sont des acides phosphoriques et phosphoniques.

3. Procédé selon la revendication 1, caractérisé en ce que les composés carbonés contenant des groupes hydroxyle comprennent des polyalcools et/ou des polyphénols, choisis de préférence parmi l'éthylèneglycol, le glycérol, le 1,2- et le 1,3-propanediol, un diméthylolpropane, le 1,4-butanediol, le 1,2,6-hexanetriol, le pentaérythritol, un cyclohexanediol, le méso-inositol, le 1,4-dihydroxyméthyl-2,5-dihydroxybenzène, le pyrocatéchol, le résorcinol et leurs mélanges.

4. Procédé selon l'une quelconque des revendications 1 à 3, caractérisé en ce que l'on ajoute aux résines une quantité de composés phosphorés non halogénés telle que l'on obtient une teneur en phosphore de 1 à 12, en particulier de 2 à 8 % en masse.

5. Procédé selon l'une quelconque des revendications 1 à 4, caractérisé en ce que l'on ajoute les charges habituelles à la résine précondensée avant le durcissement.

6. Résines phénol-formaldéhyde précondensées, pouvant être obtenues par le procédé selon l'une quelconque des revendications 1 à 5.

7. Utilisation des résines phénol-formaldéhyde précondensées selon la revendication 6 dans la préparation de matières à mouler, de vernis, de liants et d'agents d'imprégnation ainsi que des colles.
